(19) Europäisches Patentamt

European Patent Office

Office européen des brevets

(11) Publication number: **0 226 881 B1**

# EUROPEAN PATENT SPECIFICATION

(45) Date of publication of patent specification: **23.02.94**　(51) Int. Cl.⁵: **G02B 6/32**, G02B 6/26, G02B 6/38

(21) Application number: **86116641.1**

(22) Date of filing: **29.11.86**

(54) **Fiber optic relay connector.**

(30) Priority: **16.12.85 US 809186**

(43) Date of publication of application:
**01.07.87 Bulletin 87/27**

(45) Publication of the grant of the patent:
**23.02.94 Bulletin 94/08**

(84) Designated Contracting States:
**DE FR GB IT NL**

(56) References cited:
**EP-A- 0 023 114**
**GB-A- 2 002 136**
**GB-A- 2 148 536**
**US-A- 4 268 112**

(73) Proprietor: **POLAROID CORPORATION**
**549 Technology Square**
**Cambridge, Massachusetts 02139(US)**

(72) Inventor: **Fantone, Stephen D.**
**85 Holland Street**
**Sauges, MA 01906(US)**

(74) Representative: **Koch, Günther, Dipl.-Ing. et al**
**Patentanwälte,**
**Wallach, Koch, Dr. Haibach, Feldkamp,**
**Postfach 12 11 20**
**D-80035 München (DE)**

## Description

### BACKGROUND OF THE INVENTION

This invention in general relates to fiber optics and in particular to connectors for demountably coupling pairs of optical fibers or the like.

Compared with other media of like size, a major advantage to optical fiber as a communications medium resides in its much higher capacity to transfer information. This comes about because a communication channel requires the same bandwidth wherever it operates in the spectrum, and the higher frequency optical regions where fibers operate inherently have higher channel and thus information carrying capacity. This major advantage, however, is also a major disadvantage when it comes to making connections between already small fibers because the consequences of signal loss are proportionately more severe.

To solve the coupling problem with minimal signal loss, those skilled in the art have taken two basic approaches to the design of connectors, devices by which fibers or other fiber optic elements can be optically coupled and decoupled with reasonable frequency.

The first basic approach involves the use of the precision butt joint. Here, practically achievable physical structures are employed to meet the axial, lateral, and azimuthal precision required for proper alignment with minimum loss. Usually, this approach reduces to the use of a ruggedized connector in which the fibers themselves are fixed in precision ferrules which thereafter are aligned to complete the ultimate positioning of the fibers with respect to one another.

The second basic approach involves the use of lenses to provide enlarged images of the fibers which then are physically aligned. The strategy here is to trade off the strict linear dimensional requirements involved with the butt joint approach against a more exact angular tolerance. Typically, the lens connector utilizes two symmetrically arranged lenses structured so that fibers placed at the focii are imaged one onto the other. The geometry which is of major importance using this approach is usually integrated into the optical structure, and the tolerances of importance relate to lens tilt, beam aiming, and the accuracy with which the fibers are located with respect to the focus of their respective lenses. As an example of this type of a connector, reference may be had to U.S. Patent No. 4,421,383.

The present invention relates to an optical fibre connector as specified in the preamble of claim 1. Optical fibre connectors of this kind are disclosed in GB-A-2002136. In this known connector system both spherical balls have the same size and are of a single index of refraction of substantially 2.0. The balls are separated from one another and in the preferred embodiment they are separated by a ball diameter. This distance is necessary in said known device for achieving efficient coupling. This is so because a source of finite size even placed at the focus of a lens, will produce a diverging beam. Only when the source is imaged into the pupil of the receiving lens will there be optimum coupling. This condition occurs when the balls are separated by one diameter with index 2.0. The best separation is the one ball diameter away because the effective focal length for an index of 2.0 is equal to a ball radius. Therefore, when the balls are separated by 2R, the fibers will be more or less perfectly imaged one onto the other, all other things being perfect. However, if the separation is changed (made equal to zero or in contact), the index is other than two, or the fibre numerical aperture or size are mismatched, the coupling will be accordingly inefficient.

The present invention addresses the general problem of how to efficiently couple two fibres, even fibres of dissimilar geometry and numerical aperture while at the same time providing a coupling system that can be easily aligned.

The solution of the above problem is achieved by an optical fibre connector in accordance with the characterizing portion of claim 1 and by a method with the features of claim 2 respectively.

The invention therefore in general relates to a lens type connector by which pairs of similar or dissimilar optical fibers can be coupled and decoupled with reasonable frequency.

In its most general form, the connector of the invention comprises two dissimilar spherical balls whose surfaces are in contact with one another at a point along an optical axis passing through their centers. The radii and indices of refraction of the sperhical balls can be different, but are related in such a way that a pair of fibers or other elements, each of which is in optical contact with the surface of a respective spherical ball at a point along the optical axis opposite the point of contact, are imaged one onto the other with their numerical apertures transformed and matched to assure optimum energy transfer between elements.

Optical contact between the spherical surfaces and the elements is achieved through the use of index matching material. The spherical balls are held in contact with one another by supporting and fixing means comprising two housing portions and a sleeve and whose design is such that the spherical balls initially can be easily rolled on one another to optimize throughput and thereafter can be fixed in place.

In special circumstances, the spherical balls can be of equal size and index or both and, in all cases, easily can be fabricated and aligned for optimal throughput.

The invention, will best be understood from the following detailed description when read in connection with the accompanying drawings wherein the same number has been used to denote a part wherever it appears in the figures and wherein:

Fig. 1 is a diagrammatic elevational view of the connector of the invention with parts of it shown in section; and

Fig. 2 is a diagrammatic representation showing an alternative arrangement for practicing part of the invention.

DETAILED DESCRIPTION

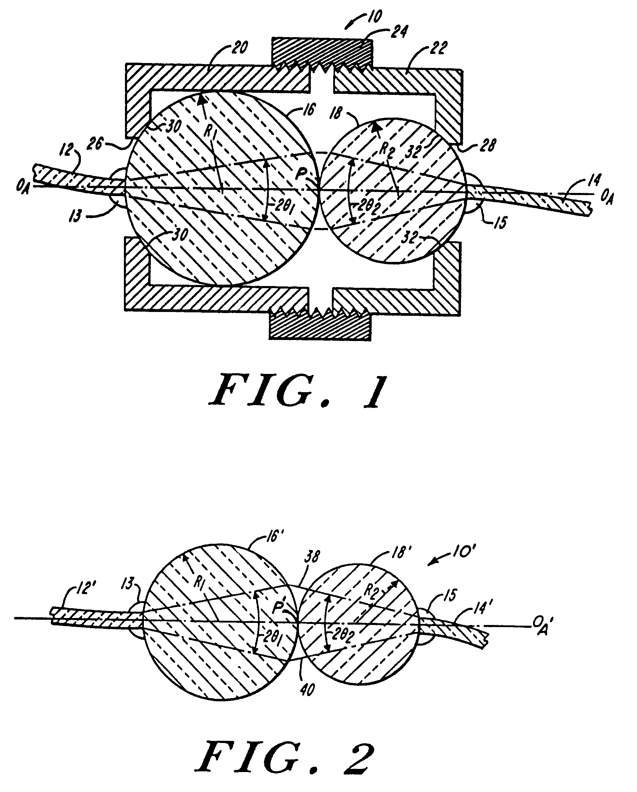

A fiber optic connector in accordance with this invention as shown at 10 in FIG. 1 is a two element relay system which transforms and matches the numerical aperture (NA) of an entering beam of radiation to that of the acceptance numerical aperture of the exiting optic where in general the NA's of entering and emerging beams can be different. As such, its use is not restricted to just the coupling of optical fibers, although it is particularly suitable for that purpose. Other fiber optic coupling tasks which it may perform include, for example, the formation of links between source and detector, source and fiber, or detector and fiber.

In Fig. 1, connector 10 is illustrated as a means by which a pair of optical fibers, 12 and 14, with perfectly general physical and optical properties are coupled to one another for the efficient transfer of radiation between them. For this purpose, connector 10 comprises as its two element relay system a pair of spherical balls, 16 and 18. The radii and indices of refraction of balls 16 and 18 are $R_1$ and $R_2$ and $N_1$ and $N_2$, respectively, while the numerical apertures of fibers 12 and 14 are $NA_1$ and $NA_2$, respectively, where $NA_1 = N_1 \sin\theta_1$, and $NA_2 = N_2 \sin\theta_2$. In general, all of these parameters can take on different numerical values depending on the particular coupling task, but the values which they take on are not independent of one another. Instead, values that the foregoing parameters can have are related by mathematical expressions which define the limits of possible variation in the parameters while still assuring both proper imaging and numerical aperture transformation from one fiber to the other.

Now referring again to Fig. 1, it is seen that the spherical balls, 16 and 18, are in contact with one another at a point, P, which is along the optical axis, OA, a line drawn through and extending beyond the centers of spherical balls, 16 and 18.

Fibers 12 and 14 are in optical contact with the surfaces of spherical balls, 16 and 18, respectively, at points on the optical axis, OA, opposite the joint, P, at which spherical balls, 16 and 18, are in contact.

The fibers, 12 and 14, are for this purpose glued in place with index matching epoxy shown at 13 and 15, respectively.

The optical path length from the end of fiber 12 taken as object position to point, P, is the reduced distance $N_1/2R_1$ and from point, P, to the end of fiber 14, taken as image distance, is the reduced distance $N_2/2R_2$. If one assumes that the spherical balls, 16 and 18, can be replaced by thin lenses in contact at point, P, each followed by a thickness of, say, glass with the reduced distances, then the paraxial condition for imaging the end of fiber 12 onto the end of fiber 14 is given by:

$$(N_1/2R_1) + (N_2/2R_2) = (N_1-1)/R_1 + (N_2-1)/R2 \qquad (1)$$

Expanding and collecting terms and letting $K = N_2/N_1$, equation (1) can be rewritten in more convenient form as:

$$N_1 = 2(R_1 + R_2)/(R_2 + KR_1) \qquad (2)$$

If one lets $p = R_2/R_1$, then equation (2) can also be written as:

$$N_1 = 2(1 + p)/(K + p) \qquad (3)$$

Thus, equations (2) and (3) represent various parameters for given ranges of other related parameters to satisfy the imaging requirement.

For example, suppose $p = 1$. Then $R_1 = R_2$ and $N_1 = 4(K + 1)$ and $N_2 = 4K/(K + 1)$. For the case where the radii are equal, one has the variation in K with $N_1$ in the form of a curve relating the two. Consequently, $N_2$ is always known as well.

If the indices and radii are to vary, it is easier to work with plots generated using the equation (3) form of the imaging condition.

Now, it can be shown that the connector 10 to transform the numerical aperture of fiber 12 ($NA_1$) to match that of fiber 14 ($NA_2$) requires satisfaction of the following transformation ratio:

$$T = NA_2/NA_1 = (R_1 N_2)/(R_2 N_1) \qquad (4)$$

or in rewritten form:

$$NA_2 = (K/p)NA_1 \qquad (5)$$

In terms of relative aperture, equation (4) becomes:

$$T = (F_1/\#)/(F_2/\#) \qquad (6)$$

For example, suppose you wish to convert an F/1.5 (NA = 0.33) source to an F/3.0 cone (NA = .166) for coupling to a fiber. Here T = 0.5 and K/p

= 0.5. Now $N_1$ = 2(1 + p)/K + p) = 2(1 + 1/p)/(1 + T) = 2(1 + 1/p)/1.5.With $N_1$ = 1.5, then 2/p = 0.125 and p = 16. K is then 8 and $N_2$ is an unreasonably high index of refraction value so you need to assume a different value for $N_1$, say $N_1$ = 2.0. Going through a similar iterative process for $N_1$ = 2.0, one finds $N_2$ = 2.0 also. Similarly, with $N_1$ = 1.78, $N_2$ = 2.65 and with $N_1$ = 1.85, $N_2$ = 2.38.

So, the design approach is an iterative one, assuming just some values of the parameters and then calculating what the others must be to satisfy imaging and numerical aperture transformation equations. One then examines these calculated values to see if they are realistic in terms of sizes and materials available. If not, the initial assumptions are changed and the calculations redone until satisfactory values for all parameters are found.

The recommended iterative approaches are to start with K = 1 and then calculate p. This will indicate how to perform the transformation just using spherical balls of different size. Alternatively, let p = 1 and calculate K. Then calculate $N_1$ and $N_2$. If these values are not realistic, assume p is not equal to 1.

There are a number of special cases. If $N_1$ = 2.0, then K must equal 1. This is so because with $N_1$ = 2.0 the light exiting the first ball is collimated and independent of ball radius. Hence, to focus this light on the back of the second ball, $N_2$ must also equal 2.0. Where $N_1$ is not equal to 2.0, then $N_2$ is not equal to 2 by symmetry.

If p = 1, then alignment can be achieved by a sleeve since $R_1$ = $R_2$. From a practical standpoint for the near IR (0.8 micrometers), T ratios of 1.6 can be obtained. For example, if T = 1.58, $N_1$ = 1.55, and $N_2$ = 2.45. By using crystalline materials such as Si, Ge, or $SbS_3$, even larger T ratios are possible.

Spherical balls 16 and 18 are held in contact through the use of the mechanical arrangement of Fig. 1, comprising housings 20 and 22, both of which screw into sleeve 24. Each housing, 20 and 22, includes an aperture 26 and 28, respectively, which have interior bevels 30 and 32, respectively. The angles for the bevels, 30 and 32, are selected to accommodate a range of radii such that the balls are always tangent to the beveled surface.

In operation, the housings 20 and 22 are advanced into the sleeve 24 until spherical balls 16 and 18 are touching at point P with just enough force to bring them into contact and to permit them to rotate. To optimize fiber throughput, one fiber is excited and the output of the other monitored while the spherical balls 16 and 18 are rotated or rolled on one another until optimum throughput is observed. Afterwards balls 16 and 18 are fixed in place with any appropriate means such as a suitable epoxy adhesive.

Collimation of the radiant beam emerging from one spherical ball is not required for proper operation of the connector 10. As shown in Fig. 2, for example, with rays 38 and 40, the beam of radiation emerging from one ball (16') can be either converging or diverging, depending on perspective, with the necessary power correction provided by the remaining ball (18').

Thus, the foregoing analysis details the relationship between refractive index and ball diameter ratio for a two ball coupling arrangement. It is assumed that all sources and sinks were in contact with the surface of a ball. Although this is not strictly necessary, it does simplify the mathematics somewhat. To obtain a small back focus, the refractive index of one or both balls can be lowered slightly or in some cases, the radii of the balls can be reduced slightly.

This geometry for a connector has several distinct advantages. First, focus is not an issue. It is primarily dependent on refractive index and only weakly dependent on ball diameter. Alignment is adjusted by rolling the balls on one another. This is a positive adjustment that is readily accomplished.

Those skilled in the art may practice the invention in other ways in accordance with its teachings and still be within its scope. Therefore, it is intended that all matter contained in the above description or shown in the accompanying drawings shall be interpreted as illustrative and not in a limiting sense.

## Claims

1. A connector for optically coupling a pair of optical fibres (12,14;12',14') each having an end face, a predetermined aperture $NA_1$, $NA_2$, and operating in a predetermined wavelength range, said connector being operable in said predetermined wavelength range and comprising:
    - a pair of spherical balls (16,18;16',18') composed of a material which is transparent in said predetermined wavelength range; and
    - holding means for holding said balls in a predetermined relative position to each other in which a surface portion of one of said balls and a surface portion of the other of said balls are freely accessible for connection to a respective one of said end faces of said fibres, said surface portions being centred around the points where a common optical axis passing through the centres of the balls intersects the opposite outer surfaces of the balls
    - the radii $R_1$, $R_2$ and indices $N_1$, $N_2$ of refraction of the balls being chosen such that the end faces of said fibres are imaged onto each other via the balls, characterized

- in that said holding means comprises supporting means (20,22) which supports said balls in an abutting relationship and which permits rotation of each of the balls about any desired axis through the ball centre prior to the application of a fixing means (24) for securing the balls in a fixed relationship to each other in which there is optimum coupling between the fibres
- and in that said radii and indices of refraction satisfy the following equations

$N_1 = 2(R_1 + R_2)/(R_2 + KR_1)$ and
$(R_1 N_2)/(R_2 N_1) = NA_2/NA_1$,

where $K = N_2/N_1$, thereby ensuring that said end faces are imaged onto each other and that the numerical apertures of said optical fibres are matched.

2. A method of assembling a connector according to claim 1 comprising the following steps :
- the optical fibres are bonded onto said spherical balls;
- said balls are inserted into housing portions (20, 22) having apertures for said optical fibres;
- the housing portions are screwed into a sleeve (24);
- the balls (16, 18; 16', 18') are advanced with their housing portions within said sleeve until the spherical balls (16, 16' and 18, 18') are touching at point (P) with just enough force to bring them into contact and to permit them to rotate;
- to optimize fiber throughput, one optical fibre is excited and the output of the other monitored while the spherical balls (16, 16' und 18, 18') are rotated or rolled on one another until optimum throughput is observed;
- balls (16, 16' and 18, 18') are fixed in place with any appropriate means such as a suitable epoxy adhesive.

**Patentansprüche**

1. Verbinder zur optischen Kopplung zweier optischer Fasern (12, 14; 12', 14'), von denen jede eine Stirnfläche und eine vorbestimmte Apertur ($NA_1$, $NA_2$) aufweist und in einem vorbestimmten Wellenlängenbereich arbeitet, wobei der Verbinder in diesem vorbestimmten Wellenlängenbereich wirksam ist und folgende Merkmale aufweist:

- zwei sphärische Kugeln (16, 18; 16', 18') bestehen aus einem Material, welches in diesem vorbestimmten Wellenlängenbereich transparent ist; und
- Haltemittel zum Halten der Kugeln in einer vorbestimmten Relativstellung zueinander, wobei ein Oberflächenabschnitt der einen Kugel und ein Oberflächenabschnitt der anderen Kugel frei zugänglich ist, um eine Verbindung mit jeweils einer der Endflächen der Fasern herzustellen, wobei diese Oberflächenabschnitte um Punkte gekrümmt sind, wo eine gemeinsame optische Achse durch die Mittelpunkte der Kugeln hindurchläuft und die gegenüberliegenden äußeren Oberflächen der Kugeln schneidet,
- wobei die Radien ($R_1$, $R_2$) und die Brechungsindizes ($N_1$, $N_2$) der Kugeln so gewählt sind, daß die Stirnflächen der Fasern über die Kugeln aufeinander abgebildet werden,

dadurch gekennzeichnet,

- daß die Haltemittel Stützorgane (20, 22) aufweisen, die die Kugeln in gegenseitiger Berührung abstützen und eine Drehung jeder Kugel um irgendeine gewünschte Achse durch den Kugelmittelpunkt zulassen, bevor Fixierungsmittel (24) angebracht werden, die die Kugeln in einer festen Beziehung zueinander haltern, in der eine optimale Kopplung zwischen den Fasern vorhanden ist,
- und daß die Radien und die Brechungsindizes die folgenden Gleichungen erfüllen:

$N_1 = 2(R_1 + R_2)/(R_2 + KR_1)$ und
$(R_1 N_2)/(R_2 N_1) = NA_2/NA_1$

wobei $K = N_2/N_1$, wodurch gewährleistet wird, daß die Stirnflächen aufeinander abgebildet werden und die numerischen Aperturen der optischen Fasern einander angepaßt werden.

2. Verfahren zum Zusammenbau eines Verbinders gemäß Anspruch 1, welches die folgenden Schritte umfaßt:
- die optischen Fasern werden an den sphärischen Kugeln festgeklebt;
- die Kugeln werden in Gehäuseteile (20, 22) eingelegt, die Öffnungen für die optischen Fasern besitzen;
- die Gehäuseteile werden in eine Gewindehülse (24) eingeschraubt;

- die Kugeln (16, 18; 16', 18') werden mit ihren Gehäuseteilen innerhalb der Gewindehülse vorgeschoben, bis die sphärischen Kugeln (16, 16' und 18, 18') einander an einem Punkt (P) berühren, wobei die Kraft gerade ausreicht, um sie in Berührung zu bringen und eine Drehung zuzulassen;
- zur Optimierung des Faserdurchgangs wird eine optische Faser erregt, und der Ausgang der anderen Faser wird überwacht, während die sphärischen Kugeln (16, 16' und 18, 18') gedreht oder aufeinander abgerollt werden, bis ein optimaler Durchsatz beobachtet wird;
- die Kugeln (16, 16' und 18, 18') werden an Ort und Stelle durch geeignete Mittel, beispielsweise einen geeigneten Epoxydkleber, festgelegt.

**Revendications**

1. Connecteur pour coupler optiquement une paire de fibres optiques (12, 14; 12', 14') ayant chacune une face d'extrémité, une ouverture prédéterminée (NA$_1$, NA$_2$) et fonctionnant dans une plage prédéterminée de longueur d'ondes, ledit connecteur pouvant fonctionner dans ladite plage prédéterminée de longueur d'ondes et comprenant :
   - une paire de billes sphériques (16, 18; 16', 18') faites d'un matériau qui est transparent dans ladite plage prédéterminée de longueur d'ondes, et
   - un moyen de retenue pour tenir lesdites billes dans une position relative prédéterminée l'une par rapport à l'autre, dans laquelle une partie de la surface de l'une desdites billes et une partie de la surface de l'autre desdites billes sont librement accessibles pour une connection à l'une respective desdites faces d'extrémité desdites fibres, lesdites parties de surface étant centrées autour des points où un axe optique commun, passant par les centres des billes, coupe les surfaces extérieures opposées des billes

les rayons (R$_1$, R$_2$) et les indices de réfraction (N$_1$, N$_2$) des billes étant choisis de telle sorte que les faces d'extrémité desdites fibres soient les images l'une de l'autre via les billes, caractérisé en ce que ledit moyen de retenue comprend un moyen de support (20, 22) qui supporte lesdites billes en about et qui permet la rotation de chacune desdites billes autour de tout axe souhaité passant par le centre de la bille avant la mise en place d'un moyen de fixation (24) destiné à immobiliser les billes dans une position fixe l'une par rapport à l'autre dans laquelle le couplage entre les fibres est optimal,

et en ce que lesdits rayons et indices de réfraction satisfont aux équations suivantes :

$$N_1 = 2 (R_1 + R_2)/(R_2 + KR_1) \text{ et}$$
$$(R_1 N_2)/(R_2 N_1) = NA_2/NA_1,$$

dans lesquelles K = N$_2$/N$_1$, ce qui garantit que lesdites faces d'extrémité sont l'image l'une de l'autre et que les ouvertures numériques desdites fibres optiques sont en concordance.

2. Procédé d'assemblage d'un connecteur conforme à la revendication 1, comprenant les étapes suivantes :
   - les fibres optiques sont fixés sur lesdites billes sphériques,
   - lesdites billes sont introduites dans des parties de boîtier (20, 22) ayant des ouvertures pour lesdites fibres optiques,
   - les parties de boîtier sont vissées dans un manchon (24),
   - les billes (16, 18; 16', 18') sont avancées avec leurs parties de boîtier à l'intérieur dudit manchon jusqu'à ce que les billes sphériques (16, 16' et 18, 18') se touchent au niveau d'un point (P) avec une force juste suffisante pour les amener en contact et leur permettre de tourner,
   - pour optimiser la transmission des fibres, une fibre Optique est excitée et la sortie de l'autre est surveillée tandis que l'on fait tourner ou rouler l'une sur l'autre les billes sphériques (16, 16' et 18, 18') jusqu'à ce que l'on observe une transmission optimale,
   - les billes (16, 16' et 18, 18') sont fixées en place par tout moyen approprié comme une colle époxyde appropriée.

FIG. 1

FIG. 2